Europäisches Patentamt

**European Patent Office**

**Office européen des brevets**

(11) Numéro de publication: **0 262 002**
**A1**

(12) **DEMANDE DE BREVET EUROPEEN**

(21) Numéro de dépôt: **87401770.0**

(22) Date de dépôt: **29.07.87**

(51) Int. Cl.⁴: **G 01 B 7/28**
G 01 B 7/34, B 21 B 37/06,
G 01 L 5/10

(30) Priorité: **30.07.86 FR 8611066**

(43) Date de publication de la demande:
**30.03.88 Bulletin 88/13**

(84) Etats contractants désignés:
**AT BE CH DE ES FR GB GR IT LI LU NL SE**

(71) Demandeur: **CLECIM SA**
**107 boulevard de la Mission Marchand B.P. 306**
**F-92402 Courbevoie Cédex (FR)**

(72) Inventeur: **Morel, Michel**
**4 bis Avenue André Chenier**
**F-77500 Chelles (FR)**

(74) Mandataire: **Phélip, Bruno et al**
**c/o Cabinet Harlé & Phélip 21, rue de la Rochefoucauld**
**F-75009 Paris (FR)**

(54) **Procédé pour le contrôle du profil d'une bande.**

(57) Procédé de réalisation d'un rouleau de contrôle du profil d'une bande,comprenant un corps cylindrique creux (13) monté rotatif autour de son axe (10) et une pluralité de capteurs de mesure (4) placés dans des logements (3) ménagés dans l'épaisseur du corps (13) et s'appuyant vers l'extérieur sur une paroi mince (2) de fermeture du logement (3) placée sur la périphérie du rouleau (1) en contact avec la bande (5),caractérisé par le fait que l'on réalise les logements (13) par usinage d'embrèvements de l'intérieur vers l'extérieur du corps (13) dans une direction radiale et sur une profondeur (a) inférieure à l'épaisseur (b) du corps (13) de façon à laisser subsister dans la masse de ce dernier, un fond (21) de fermeture du logement (31) susceptible de constituer la paroi mince interposée entre le capteur (4) et la bande (5), celle-ci étant appliquée directement sur la face externe (14) du corps cylindrique (13),ladite paroi mince étant ménagée sur la périphérie et dans l'épaisseur du corps (13).

L'invention permet de contrôler le profil et/ou l'état de tension d'une bande métallique laminée .

**FIG.1**
**(ART ANTERIEUR)**

EP 0 262 002 A1

Bundesdruckerei Berlin

**Description**

Procédé pour le contrôle du profil d'une bande

L'invention a pour objet un procédé pour le contrôle au défilé du profil d'une bande .

Pour contrôler le profil d'une bande de métal laminé, et notamment sa planéité, dans de nombreuses installations de laminage,on utilise des rouleaux de contrôle s'étendant transversalement à l'axe de défilement,sur toute la largeur de la bande, qui s'enroulent sur un secteur du rouleau avec une certaine pression d'application. A l'intérieur du rouleau,est placée une série de capteurs de palpage mesurant les variations de pression,qui permettent de vérifier la planéité ,notamment en mesurant les tensions en plusieurs séries parallèles de points de mesure répartis sur la largeur de la bande . On a constaté en effet que des irrégularités dans la répartition des tensions au sortir du laminoir déterminaient après la coupe de la bande et le détensionnement qui en résulte, l'apparition de défauts de planéité se traduisant par des poches. En contrôlant les épaisseurs de la bande et la répartition des tensions, à la sortie du laminoir, on peut agir immédiatement sur le profil des rouleaux de laminage pour corriger les effets détectés.

Les écarts de tension ou de planéité mesurés sont très faibles, et l'on utilise, pour les mesurer, des capteurs très précis qui sont placés dans des logements ménagés à l'intérieur du rouleau. A cet effet,dans les modes de réalisation utilisés jusqu'à présent,on utilise des rouleaux en deux parties,respectivement un corps cylindrique creux formant un arbre tubulaire et dans l'épaisseur duquel sont ménagés des logements régulièrement répartis et une paroi mince enveloppant l'arbre tubulaire. Les logements traversent toute l'épaisseur de l'arbre tubulaire et sont fermés vers l'extérieur par la paroi mince,de telle sorte que les capteurs de mesure placés dans les logements et comprenant un organe de palpage s'appuyant sur le fond constitué par la paroi mince,en contact avec la bande ,peuvent mesurer les légères déformations de ce fond qui résultent des défauts de planéité ou des différences de tension dans la bande.

La paroi mince était donc constituée jusqu'à présent d'une enveloppe cylindrique mince de diamètre interne sensiblement égal au diamètre externe du corps tubulaire,enfilée sur ce dernier et appliquée généralement par frettage à chaud l'enveloppe étant,pour cette raison, souvent appelée frette.

Jusqu'à présent,on avait considéré ce mode de réalisation comme allant de soi car il est relativement facile à mettre en oeuvre et il permet de réaliser la frette mince en acier spécial résistant à l'usure du produit, le corps tubulaire étant en acier plus ordinaire . Toutefois, le montage de la frette préalablement chauffée pour réaliser le frettage est assez complexe et nécessite l'emploi d'un four de chauffage,normalement à induction. D'autre part,même si elle est réalisée en acier spécial, la frette doit être soumise à un traitement ou à un revêtement de surface effectué après la pose, et qui peut entraîner une diminution ou même la suppression de l'effet de frettage.

A titre de document illustrant la technique antérieure, on peut citer aussi le brevet FR-A-2 357876. Celui-ci décrit un dispositif qui est applicable à la mesure des tensions d'une bande d'acier et comprend un rouleau formé de bagues juxtaposées, tournant avec la bande en cours de défilement . La particularité essentielle du dispositif réside dans l'exploitation des résultats fournis par des indicateurs dynamométriques montés sur les bagues . On ne trouve dans ce brevet antérieur aucun enseignement sur un procédé de réalisation d'un rouleau de contrôle .

Par ailleurs,le brevet JP-A-60 237 335 décrit un montage à paroi mince, élastiquement déformable sous l'effet de la tension de la bande. La déformation peut être transmise à un capteur par un élément détecteur et l'information représentative de l'état de la bande est alors exploitée . Ce brevet enseigne une réalisation complexe d'un rouleau de contrôle .

L'invention a pour objet un procédé permettant de réaliser plus simplement le rouleau de contrôle et d'éviter les inconvénients d'une enveloppe frettée.

L'invention a donc pour objet un procédé de réalisation d'un rouleau de contrôle du profil d'une bande, comprenant un corps cylindrique creux monté rotatif autour de son axe et une pluralité de capteurs de mesure placés dans des logements ménagés dans l'épaisseur du corps et s'appuyant vers l'extérieur sur une paroi mince de fermeture du logement placée sur la périphérie du rouleau en contact avec la bande , caractérisé par le fait que l'on réalise les logements par usinage d'embrèvements de l'intérieur vers l'extérieur du corps dans une direction radiale et sur une profondeur (a) inférieure à l'épaisseur (b) du corps de façon à laisser subsister dans la masse de ce dernier, un fond de fermeture du logement susceptible de constituer la paroi mince interposée entre le capteur et la bande , celle-ci étant appliquée directement sur la face externe du corps cylindrique , ladite paroi mince étant ménagée sur la périphérie et dans l'épaisseur du corps.

L'invention a également pour objet un procédé de réalisation d'un rouleau de contrôle du profil d'une bande, comprenant un corps cylindrique creux monté rotatif autour de son axe et une pluralité de capteurs de mesure placés dans des logements ménagés dans l'épaisseur du corps et s'appuyant vers l'extérieur sur une paroi mince de fermeture du logement placée sur la périphérie du rouleau en contact avec la bande , caractérisé par le fait que l'on réalise des logements traversant radialement toute l'épaisseur du corps cylindrique et que l'on ferme ensuite lesdits logements vers l'extérieur par des pastilles préparées à l'avance et soudées chacune le long du bord de l'orifice de sortie du logement correspondant.

L'invention comprend aussi les caractéristiques suivantes , considérées isolément ou selon toutes leurs combinaisons techniquement possibles :
- on ménage sur le bord de l'orifice de sortie vers l'extérieur de chaque logement un lamage de hauteur égale à l'épaisseur du bord externe des pastilles et de même section, lesdites pastilles étant emboîtées et soudées chacune dans un lamage.
- on divise le corps cylindrique en au moins deux parties séparées correspondant chacune à un secteur angulaire du rouleau,sur lesquelles sont d'abord réalisés séparément les logements par usinage d'embrèvements , lesdites parties étant ensuite accolées et soudées le long de plans de joints passant par l'axe pour reconstituer le rouleau .
- on divise le rouleau en une pluralité d'anneaux toriques usinés séparément pour la réalisation des embrèvements ou logements puis soudés les uns à la suite des autres pour reconstituer le rouleau;
- les différentes parties du rouleau sont soudées par faisceau d'électrons ,
- le corps cylindrique est constitué de deux parois cylindriques emmanchées l'une dans l'autre, respectivement une paroi externe sur laquelle sont réalisés les embrèvements ou logements des capteurs et une paroi interne dans laquelle sont ménagés des alésages susceptibles de venir se placer chacun, après emmanchement, dans le prolongement d'un logement , l'épaisseur et les caractéristiques de la paroi interne étant déterminées de façon à donner à l'ensemble du rouleau la résistance mécanique nécessaire ,
lesdits logements sont réalisés par électroérosion sur la paroi interne.

L'invention sera encore illustrée sans être aucunement limitée par la description suivante, faite en référence aux dessins annexés sur lesquels :

Fig.1 représente,en coupe axiale, une partie d'un rouleau de contrôle réalisé de façon classique;

Fig.2 est une coupe axiale d'un rouleau de contrôle réalisé selon l'invention;

Fig .3 est une vue de détail du rouleau, en coupe transversale à l'axe ;

Fig.4 représente un mode particulier d'usinage du rouleau ;

Fig.5 est une vue de détail d'un logement en coupe par un plan transversal à l'axe du rouleau;

Fig.6 est une vue en perspective d'un autre mode de réalisation du rouleau;

Fig.7 représente en coupe axiale une autre variante de réalisation du rouleau.

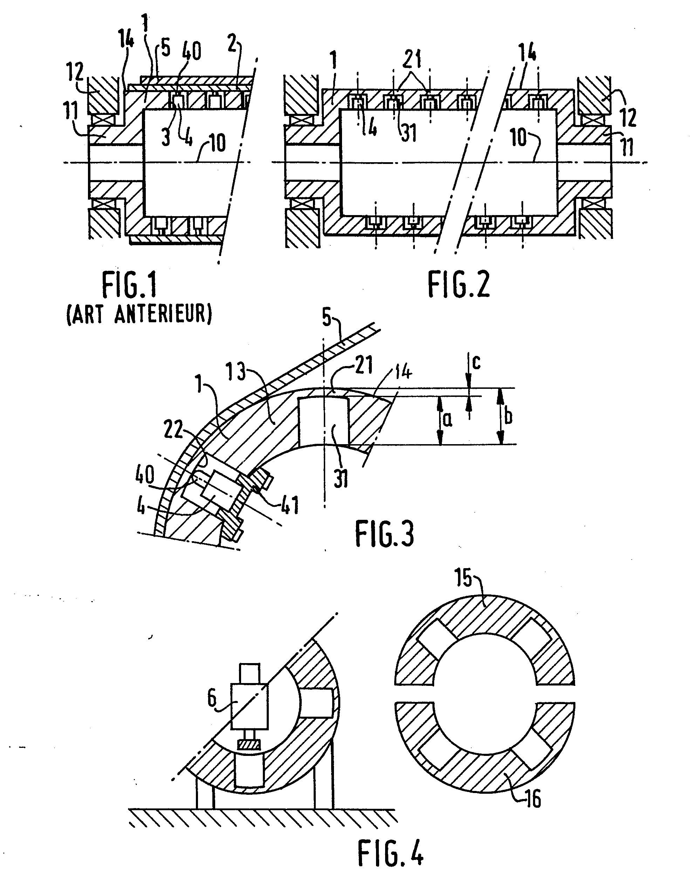

Sur la figure 1,on a représenté, à titre d'exemple, un rouleau de contrôle, de constitution classique,comprenant un corps cylindrique 1 muni à ses extrémités de tourillons 11 logés dans des paliers 12 et définissant l'axe 10 de rotation du rouleau. La face extérieure 14 du corps cylindrique 1 est entourée par une enveloppe 2 constituée d'une paroi mince cylindrique, appliquée par frettage à chaud sur la face externe du corps 1 . Cette dernière est en outre traversée par des logements 3 régulièrement répartis, qui sont fermés vers l'extérieur par l'enveloppe 2.A l'intérieur des logements 3 sont placés des capteurs 4 munis d'une tête de palpage 40 qui s'appuie sur la paroi 2 pour mesurer les variations de pression dues aux défauts de planéité ou aux différences de tension de la tôle laminée 5 qui est appliquée sous tension sur le rouleau,en s'enroulant sur un secteur de ce dernier.

Par comparaison,la figure 2 montre la particularité essentielle de l'invention qui réside dans le fait que la frette 2 est supprimée. En effet, les logements des capteurs 4 sont constitués, comme on le voit plus en détail sur la figure 3,par des embrèvements 31 usinés de l'intérieur vers l'extérieur,sur une profondeur (a) inférieure à l'épaisseur (b) de la paroi cylindrique 13 du rouleau 1,de façon à laisser subsister, dans la masse de la paroi 13,un fond 21 fermant vers l'extérieur le logement 31 et d'épaisseur (c) assez mince pour remplacer la frette 2 utilisée dans le mode de réalisation classique ,en constituant lui-même la paroi mince interposée entre le capteur 4 et la bande. Le capteur 4 peut en effet être fixé de façon classique dans le logement 31, par exemple,au moyen d'une bride 41 fixée sur la paroi cylindrique 13,l'organe de palpage 40 s'appuyant sur la face interne 22 du fond de fermeture 21 pour mesurer la pression exercée par la bande métallique 5 qui,dans ce cas, est appliquée directement sur la face externe 14 du corps cylindrique 13.

L'invention présente donc l'avantage de supprimer l'enveloppe extérieure 2 et sa pose par frettage .Certes, c'est alors le corps cylindrique lui-même qui est soumis à l'usure de la bande et il est nécessaire de le remplacer dans sa totalité en cas de détérioration. Cependant,on avait constaté que, de toute façon,le remplacement de l'enveloppe frettée était difficile et onéreux . En outre,il est possible de soumettre le rouleau à un traitement de surface, par exemple de nitruration,ou à un revêtement au carbure lui permettant de résister à l'usure dans de bonnes conditions.

Dans le mode de réalisation qui vient d'être décrit, les logements doivent être usinés de l'intérieur vers l'extérieur . A cet effet,il est avantageux d'utiliser le procédé de réalisation représenté schématiquement sur la figure 4. On voit en effet que le corps cylindrique 13 est alors séparé,suivant un plan passant par l'axe,en deux parties correspondant chacune, en section droite, à un demi-cercle. Chaque partie peut être usinée séparément,par exemple,au moyen d'une aléseuse-fraiseuse 6 à commande numérique qui réalise les embrèvements, à partir de l'intérieur,aux endroits et aux profondeurs voulus.Après l'usinage, le nombre de logements ayant été réduits pour simplifier la figure, les deux parties ainsi réalisées 15 et 16 sont accolées suivant le plan de joint et soudées entre elles,par exemple, par faisceau d'électrons pour reconstituer le rouleau. Une rectification de surface est suffisante pour que le rouleau,qui n'a pas à supporter d'efforts exceptionnels, soit prêt à fonctionner dans de bonnes conditions.

Mais l'invention ne se limite pas aux détails du mode de réalisation qui vient d'être décrit, des variantes et des perfectionnements pouvant être envisagés en restant dans l'esprit de l'invention et dans le cadre de protection défini par les revendications.

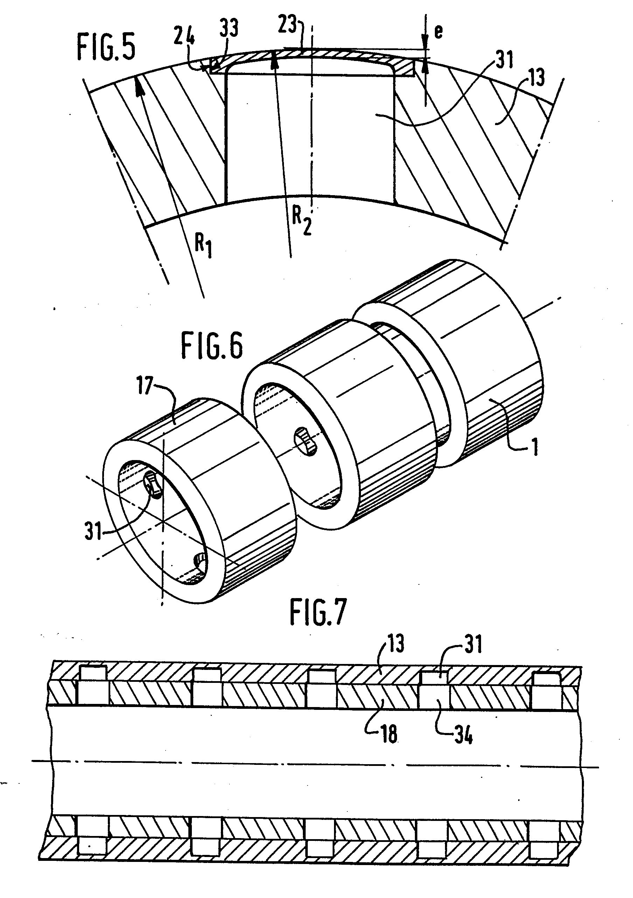

C'est ainsi que, tout en conservant l'idée essentielle de l'invention qui consiste à appliquer directement la bande métallique sur la face externe du corps cylindrique en réalisant la paroi mince dans l'épaisseur de ce dernier, on pourrait juger préférable de réaliser des logements 31 traversant toute l'épaisseur de la paroi du corps cylindrique 13 , chaque logement pouvant alors être réalisé simplement par alésage dans une direction radiale à partir de l'extérieur . La figure 5 représente, en vue de détail, un tel mode de réalisation des logements 31.La paroi mince de fermeture du logement vers l'extérieur est alors constituée par une pastille rapportée 23 formée d'une portion de paroi cylindrique dont l'épaisseur e est déterminée de façon à donner au capteur placé dans le logement 31 la sensibilité voulue et ayant sur sa face externe un rayon de courbure $R_2$ égal au rayon de courbure $R_1$ de la face externe du corps cylindrique 13. La pastille 23 ferme l'orifice de sortie vers l'extérieur du logement 31 et est soudée , le long du bord de l'orifice,de préférence par faisceau d'électrons,de façon à rétablir la continuité de la face externe 14 du corps cylindrique. De préférence, comme on l'a représenté sur la figure 5, on ménage un lamage 15 le long du bord de l'orifice extérieur du logement 31 et sur une profondeur égale à l'épaisseur des bords 24 de la pastille 23, cette épaisseur pouvant être éventuellement supérieure à l'épaisseur e de la paroi mince 21 pour renforcer la pastille . Le lamage 23 assure donc le positionnement exact de la pastille 23 qui s'y emboîte et est ensuite soudée par faisceau d'électrons.

Même lorsque les embrèvements situant les logements 31 sont réalisés à partir de l'intérieur, il n'est pas absolument nécessaire d'utiliser le mode de réalisation de la figure 4,certaines machines d'usinage de type usuel pouvant pénétrer à l'intérieur d'un corps tubulaire si celui-ci n'a pas une trop grande longueur . C'est pourquoi , comme on l'a représenté sur la figure 6, il pourrait être intéressant de réaliser le rouleau 1 sous forme d'une pluralité d'anneaux toriques 17 accolés les uns à la suite des autres .Les anneaux 17 seront usinés séparément de façon à réaliser aux emplacements voulus les logements 31 puis soudés par faisceau d'électrons le long de plans de joints perpendiculaires à l'axe de façon à reconstituer le rouleau.

Dans le cas où les logements 31 doivent être usinés de l'intérieur vers l'extérieur sans traverser toute l'épaisseur du corps cylindrique 1 de façon à laisser subsister la paroi mince, il peut être intéressant de réaliser l'usinage par électro-érosion.

Il est aussi possible que , pour faciliter l'usinage, on soit amené à donner à la paroi 13 du corps cylindrique une épaisseur insuffisante pour résister aux sollicitations mécaniques Dans ce cas, il peut être intéressant de réaliser le rouleau en deux parois massives cylindriques emmanchées l'une dans l'autre, respectivement une paroi externe 13 et une paroi interne 18 constituant un contre corps . La paroi externe 13 est alors tout d'abord usinée pour ménager les logements 31 puis emmanchée sur le contre-corps 18,celui-ci ayant été muni à l'avance d'alésages 34 positionnés de façon à se trouver chacun dans le prolongement d'un logement 31.L'épaisseur du contre-corps et éventuellement les caractéristiques mécaniques du métal le constituant peuvent être déterminées par donner à l'ensemble du rouleau la résistance mécanique nécessaire compte-tenu de l'épaisseur donnée à la paroi externe 13.

## Revendications

1.Procédé de réalisation d'un rouleau de contrôle du profil d'une bande,comprenant un corps cylindrique creux (13) monté rotatif autour de son axe (10) et une pluralité de capteurs de mesure (4) placés dans des logements (3) ménagés dans l'épaisseur du corps (13) et s'appuyant vers l'extérieur sur une paroi mince (2) de fermeture du logement (3) placée sur la périphérie du rouleau (1) en contact avec la bande (5),caractérisé par le fait que l'on réalise les logements (31) par usinage d'embrèvements de l'intérieur vers l'extérieur du corps (13) dans une direction radiale et sur une profondeur (a) inférieure à l'épaisseur (b) du corps (13) de façon à laisser subsister dans la masse de ce dernier, un fond (21) de fermeture du logement (31) susceptible de constituer la paroi mince interposée entre le capteur (4) et la bande (5), celle-ci étant appliquée directement sur la face externe (14) du corps cylindrique (13),ladite paroi mince étant ménagée sur la périphérie et dans l'épaisseur du corps (13).

2.Procédé de réalisation d'un rouleau de contrôle du profil d'une bande, comprenant un corps cylindrique creux (13)monté rotatif autour de son axe (10)et une pluralité de capteurs de mesure (4) placés dans des logements (3) ménagés dans l'épaisseur du corps (13) et s'appuyant vers l'extérieur sur une paroi mince (2) de fermeture du logement (3) placée sur la périphérie du rouleau (1) en contact avec la bande (5),caractérisé par le fait que l'on réalise des logements (31) traversant radialement toute l'épaisseur du corps cylindrique (13) et que l'on ferme ensuite lesdits logements (31) vers l'extérieur par des pas tilles (23) préparées à l'avance et soudées chacune le long du bord (32) de l'orifice de sortie du logement correspondant .

3.Procédé de réalisation d'un rouleau de contrôle selon la revendication 2,caractérisé par le fait que l'on ménage sur le bord de l'orifice de sortie vers l'extérieur de chaque logement (31) un lamage (33) de hauteur égale à l'épaisseur du bord externe (24) des pastilles (23) et de même section,lesdites pastilles (23) étant emboîtées et soudées chacune dans un lamage (33).

4.Procédé de réalisation d'un rouleau selon l'une des revendications 1 ou 2,caractérisé en ce qu'on divise le corps cylindrique (13) en au moins deux parties séparées (15,16) correspondant chacune à un secteur angulaire du rouleau (1) , sur lesquelles sont d'abord réalisés séparément les logements (31) par usinage d'embrèvements,lesdites parties (15,16) étant ensuite accolées et soudées le long de plans de joints passant par l'axe (10) pour reconstituer le rouleau (1).

5.Procédé de réalisation d'un rouleau de contrôle selon l'une des revendications 1 ou 2, caractérisé par le fait que l'on divise le rouleau en une pluralité d'anneaux toriques (17) usinés séparément pour la réalisation des embrèvements ou logements (31) puis soudés les uns à la suite des autres pour reconstituer le rouleau.

6.Procédé de réalisation d'un rouleau selon l'une des revendications 4 ou 5 , caractérisé en ce que les différentes parties (15,16 ,17) du rouleau (1) sont soudées par faisceau d'électrons.

7.Procédé de réalisation d'un rouleau selon l'une des revendications 1 ou 2,caractérisé par le fait que le corps cylindrique est constitué de deux parois cylindriques emmanchées l'une dans l'autre,respectivement une paroi externe (13) sur laquelle sont réalisés les embrèvements ou logements (31) des capteurs et une paroi interne (18)dans laquelle sont ménagés des alésages (34) susceptibles de venir se placer chacun, après emmanchement, dans le prolongement d'un logement (31),l'épaisseur et les caractéristiques de la paroi interne (18) étant déterminées de façon à donner à l'ensemble du rouleau la résistance mécanique nécessaire.

8.Procédé de réalisation d'un rouleau selon la revendication7 ,caractérisé par le fait que les logements sont réalisés par électroérosion sur la paroi interne.

0262002

FIG.1
(ART ANTERIEUR)

FIG.2

FIG.3

FIG.4

0262002

FIG.5

FIG.6

FIG.7

**Office européen des brevets**

# RAPPORT DE RECHERCHE EUROPEENNE

Numéro de la demande

EP 87 40 1770

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 357 876 (BETRIEBSFORSCHUNGSINSTITUT VDEH) * Figures 1-7; page 1, ligne 1 - page 8, ligne 30 * | 1,2,3, 5,7 | G 01 B 7/28 G 01 B 7/34 B 21 B 37/06 G 01 L 5/10 |
| X,D | PATENT ABSTRACTS OF JAPAN, vol. 10, no. 106 (P-449)[2163], 22 avril 1986; & JP-A-60 237 335 (ISHIKAWAJIMA HARIMA JUKOGYO K.K.) 26-11-1985 * Abrégé; figure * | 1-8 | |
| A | FR-A-2 468 897 (BETRIEBSFORSCHUNGSINSTITUT VDEH) * En entier * | 1,7 | |
| A | EP-A-0 028 191 (SECIM. S.A.) * En entier * | 1-8 | |
| A | US-A-3 688 571 (A.G. ATKINS) * Figures 2,3; colonne 2, ligne 18 - colonne 3, ligne 7 * | 1-8 | |
| A | US-A-3 324 695 (O. SIVILOTTI) * Figures 1,2; colonne 2, ligne 3 - colonne 3, ligne 12 * | 1-8 | |

DOMAINES TECHNIQUES RECHERCHES (Int. Cl.4)

G 01 B 7/00
G 01 L 5/00
B 21 B 37/00

Le présent rapport de recherche a été établi pour toutes les revendications

| Lieu de la recherche | Date d'achèvement de la recherche | Examinateur |
|---|---|---|
| LA HAYE | 11-11-1987 | BROCK T.J. |